(19) Europäisches Patentamt
European Patent Office
Office européen des brevets

(11) **EP 2 056 443 B1**

(12) **EUROPEAN PATENT SPECIFICATION**

(45) Date of publication and mention
of the grant of the patent:
**20.02.2019 Bulletin 2019/08**

(51) Int Cl.:
*H02P 9/48* *(2006.01)*        *H02P 9/30* *(2006.01)*
*H02P 9/02* *(2006.01)*        *H02J 7/24* *(2006.01)*

(21) Application number: **08017314.9**

(22) Date of filing: **01.10.2008**

(54) **Apparatus for controlling generation of power in vehicles**

Vorrichtung zur Steuerung der Stromerzeugung in Fahrzeugen

Appareil pour contrôler la génération électrique dans des véhicules

(84) Designated Contracting States:
**DE FR**

(30) Priority: **30.10.2007 JP 2007281656**

(43) Date of publication of application:
**06.05.2009 Bulletin 2009/19**

(73) Proprietor: **DENSO CORPORATION**
**Kariya-city,**
**Aichi-pref. 448-8661 (JP)**

(72) Inventor: **Watanabe, Yasuyuki**
**Kariya-city**
**Aichi-pref. 448-8661 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**EP-A1- 0 720 271        US-A1- 2003 062 877**
**US-A1- 2005 135 133        US-A1- 2007 096 698**
**US-A1- 2007 227 499**

**Description**

CROSS REFERENCE TO RELATED APPLICATION

This application is based on and claims the benefit of priority from earlier Japanese Patent Application No. 2007-281656 filed October 30, 2007, the description of which is incorporated herein by reference.

BACKGROUND OF THE INVENTION

(Technical field of the Invention)

The present invention relates to an apparatus for controlling generation of power in vehicles, which controls output voltage of a generator mounted on a vehicle such as a car and a motor truck.

(Related Art)

Conventionally, a method is known in which terminal voltage of a field coil is used as a signal. The signal indicates an operation state of a generator (e.g. an operating rate of the generator) of a vehicle and is transmitted to an external control unit (ECU) which is disposed outside the generator. This method is disclosed, for example, in Japanese Examined Utility Model Application Publication No. 6-19359. In addition, another method is known in which a control signal is used as the above-described signal. The control signal operates switching elements of a power generation control apparatus to control a field current. This method is disclosed, for example, in Japanese Unexamined Patent Application Publication No. 9-84398. The ECU receives the transmitted signal (in the form of a duty signal), detects the applied electrical load based on the variation in the signal, and controls a throttle valve to stabilize idling engine speed.

Meanwhile, in recent years, power generation control apparatuses having the following functions have grown in number. In one function, field current of a generator of a vehicle is gradually increased to prevent the load of the generator associated with an engine from sharply increasing when electrical loads are applied. In another function, when the temperature is low, the maximum value of the field current of the generator is restricted in order to decrease the maximum value of the load of the generator. In the case where these functions for suppressing field current are activated, when electrical loads are applied, the field current is gradually increased, or the maximum value of the field current is restricted to a predetermined value (e.g. 80 %). Therefore, the variation of the signal transmitted to the ECU (i.e. the variation of the duty value) becomes small, or the value of the signal does not reach a threshold (e.g. 90 %) held in the ECU, thereby causing a problem that the operating state of the generator of the vehicle (i.e., the operating state is a state where the electrical loads are applied) cannot be accurately detected. In consequence, the terminal voltage of the field coil and the control signal for operating the switching elements to control the field current cannot be used as a detection signal of the operating state of the generator. As a result, the stable control of idling engine speed cannot be performed. In addition, when the ECU controls the idling engine speed based on the above transmitted signal, the idling engine speed can become unstable. Documents EP0720271, US2005/135133, US2007/227499 , US2003/062877 and US2007/096698 are prior art to the present application.

SUMMARY OF THE INVENTION

The present invention has been made in consideration of the foregoing conventional situation, and an object of the present invention is to provide an apparatus for controlling generation of power in vehicles which can accurately detect an operating state of a generator of a vehicle (i.e., the operating state is a state where electrical loads are applied) and stabilize idling engine speed.

In order to achieve the object, the present invention provides, as one aspect, an apparatus for controlling generation of power in vehicles which include a generator having a field winding and a battery, characterized by comprising: a voltage comparing section that compares either output voltage of the generator or terminal voltage of the battery with a predetermined regulation voltage; a field current controlling section that controls field current passing through the field winding of the generator; a field current suppressing section that drives the field current controlling section based on a comparison result of the voltage comparing section to suppress the field current; and an external output terminal that transmits either a first signal outputted from the voltage comparing section and inputted into the field current suppressing section or a second signal corresponding to the first signal.

Accordingly, even when the control for suppressing the field current is performed, a signal is transmitted, which signal is obtained by comparing the output voltage of the generator or the terminal voltage of the battery with the regulation voltage before the control is performed. Therefore, an external control unit can accurately detect the operating state of the generator when the electrical load varies in amount (i.e., the operating state is a state where the electrical loads are applied). In consequence, the external control unit can perform control of idling engine speed (control of a throttle valve) in response to the applied electrical load to stabilize the idling engine speed.

The apparatus further comprises a signal equalizing section which equalizes the first or second signal. An output signal of the voltage comparing section fluctuates due to engine speed, intermittent electrical loads which are constantly operated, or the like. However, since the output signal is equalized, the operation state of the generator when the electrical loads are applied (i.e. the state where the electrical loads are applied) can be detected more accurately.

The apparatus further comprises a pulse signal generating section that generates a pulse signal corresponding to the first or second signal. The pulse signal is transmitted via the external output terminal. Since the signal transmitted from the external output terminal is a pulse signal, the signal can be transmitted and received between the apparatus and the external control unit by using serial communication such as LIN communication. Therefore, when comparing the above-described transmission with any direct transmission of voltage values, the above-described transmission improves reliability of the communication and facilitates sharing a signal line when other information is transmitted.

In the apparatus, the signal equalizing section performs equalization for a period of time longer than a control period of ignition of the vehicle. The period of time is preferably more than 20 ms. Accordingly, the influence of ignition noise generated during idling can be eliminated, thereby allowing the operation state of the generator (i.e. the state where the electrical loads are applied) to be more accurately detected and allowing the idling engine speed to be more stable.

In the apparatus, the field current suppressing section gradually increases the field current or restricts the maximum value of the field current.

BRIEF DESCRIPTION OF THE DRAWINGS

In the accompanying drawings:

FIG. 1 is a diagram showing a configuration of a power generation control apparatus for vehicles according to an embodiment of the present invention;

FIG. 2 is a diagram showing a configuration of a power generation control apparatus for vehicles according to a modification of the embodiment;

FIG. 3 is a diagram showing a configuration of a power generation control apparatus for vehicles according to another modification of the embodiment; and

FIG. 4 is a diagram showing a configuration of a power generation control apparatus for vehicles according to another modification of the embodiment.

DETAILED DESCRIPTION OF THE PREFERRED EMBODIMENTS

Hereinafter, an apparatus for controlling generation of power in vehicles according to an embodiment of the present invention will be described with reference to the accompanying drawings.

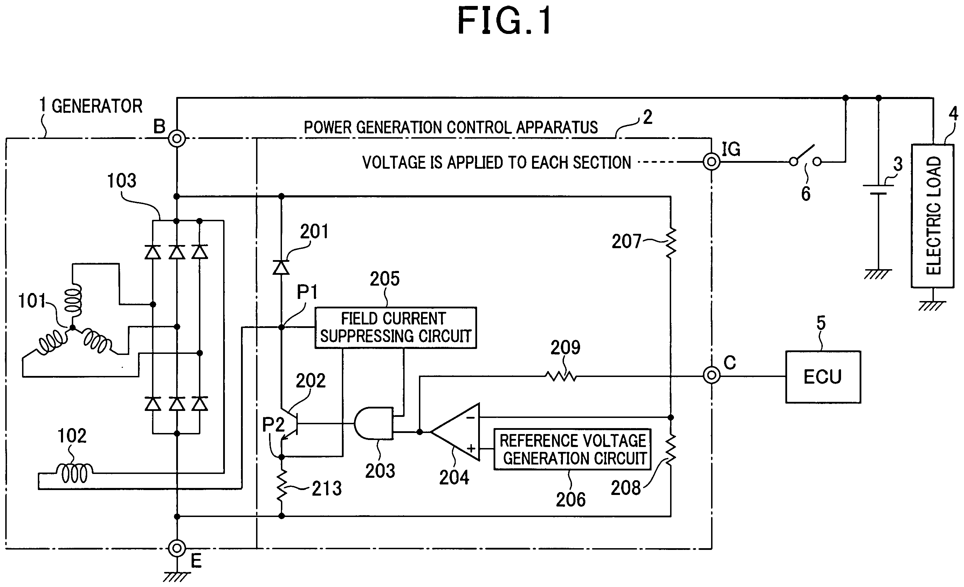

FIG. 1 is a diagram showing a configuration of a power generation control apparatus for vehicles according to an embodiment of the present invention. FIG.1 shows a connection diagram for a generator 1, a power generation control apparatus 2, a battery 3, electric loads 4, an ECU 5, and an ignition key 6, which are installed in a vehicle.

In FIG. 1, the power generation control apparatus 2 controls the voltage at an output terminal (called B terminal) of the generator 1 so as to make the voltage agree with a predetermined regulation voltage (e.g. 14 V). In addition, the power generation control apparatus 2 has not only the B terminal but also an ignition terminal (IG terminal), a communication terminal (called C terminal), and a ground terminal (called E terminal). The B terminal is connected to the battery 3 and various electric loads 4 via a predetermined charging line. The IG terminal is connected to a positive-pole terminal of the battery 3 via the ignition key 6. The C terminal is connected to the ECU 5 serving as an external control unit which is disposed outside the generator 1 and the power generation control apparatus 2. The E terminal is connected to a frame of the generator 1. Note that although the power generation control apparatus 2 and the generator 1 are depicted in FIG. 1 side by side, the power generation control apparatus 2 is contained in the generator 1 in practice. In addition, the generator 1 shares the B terminal and the E terminal with the power generation control apparatus 2.

The generator 1 comprises a three-phase stator winding 101, a field winding 102, and a rectifier circuit 103. The stator winding 101 is included in a stator. The field winding 102 is included in a rotor. The rectifier circuit 103 is arranged in order to full-wave rectify the three-phase output of the stator winding 101. The output voltage of the generator 1 is controlled in such a manner that the power generation control apparatus 2 appropriately turns on and off electric current passing through the field winding 102.

Next, a configuration and an operation of the power generation control apparatus 2 will be described in detail. As shown in FIG. 1, the power generation control apparatus 2 comprises a free-wheeling diode 201, a switching element 202, an AND circuit 203, a voltage comparator 204, a field current suppressing circuit 205, a reference voltage generation circuit 206, and resistors 207, 208, 209, and 213.

The switching element 202 is electrically connected in series with the field winding 102 and the resistor 213. When the switching element 202 is ON, field current passes through the field winding 102 and the resistor 213. The free-wheeling diode 201 is connected in parallel with the field winding 102. When the switching element 202 is OFF, the field current returns through the free-wheeling diode 201.

The reference voltage generation circuit 206 generates a reference voltage corresponding to a predetermined regulation voltage in order to adjust the output voltage of the generator 1 to the regulation voltage. The reference voltage generated by the reference voltage generation circuit 206 is applied to a positive input terminal of the voltage comparator 204. In the present embodiment, the B terminal of the generator 1 is connected to a voltage divider circuit which is composed of the resistors 207 and 208. The output voltage of the generator 1 is divided by the voltage divider circuit. The divided voltage is applied to a negative input terminal of the voltage comparator 204. The reference voltage generation circuit 206 generates the reference voltage by multiplying the regulation voltage by the division ratio of the voltage divider circuit. Note that the reference voltage generated by the reference voltage generation circuit 206 not only is used as a fixed value but also may be properly changed in response to the state of the power generation of the generator 1 or based on a regulation voltage setting signal sent from the ECU 5.

The voltage comparator 204 compares the reference voltage applied to the positive input terminal with the divided output voltage of the generator 1 applied to the negative input terminal through the voltage divider circuit composed of the resistors 207 and 208. When the divided output voltage is lower than the reference voltage, the voltage comparator 204 outputs a high-level signal. Conversely, when the divided output voltage is equal to or higher than the reference voltage, the voltage comparator 204 outputs a low-level signal. The output signal of the voltage comparator 204 is inputted into one input terminal of the AND circuit 203. An output signal of the field current suppressing circuit 205 is inputted into the other input terminal of the AND circuit 203.

The field current suppressing circuit 205 suppresses the sharp increase of the field current passing through the field winding 102 and restricts the maximum value of the field current. The field current suppressing circuit 205 performs these operations while monitoring the voltage at a connection point P1 between the switching element 202 and the field winding 102 and the voltage at a connection point P2 between the switching element 202 and the resistor 213 (output side of the switching element 202). For example, the field current suppressing circuit 205 detects the voltage at the connection point P1 between the switching element 202 and the field winding 102, and generates a signal having on-duty (on-duty ratio) obtained by increasing on-duty of the detected voltage with a predetermined increasing rate. The field current suppressing circuit 205 outputs the generated signal to the other input terminal of the AND circuit 203.

The AND circuit 203 performs AND operation between two signals inputted into the two input terminals thereof to obtain an AND signal, and outputs the AND signal to be used as a driving signal to the switching element 202. While the driving signal is at the high level, the switching element 202 is in the ON state. While the driving signal is at the low level, the switching element 202 is in the OFF state.

When a large amount of electric load 4 is connected, output voltage of the generator 1 is decreased, and the voltage comparator 204 outputs a high-level signal to the AND circuit 203. On the other hand, the field current suppressing circuit 205 generates a signal having on-duty (duty ratio) slightly higher than the on-duty of the voltage detected by the field current suppressing circuit 205, and outputs the signal to the AND circuit 203. The AND circuit 203 generates a driving signal based on the inputted signals, and outputs the driving signal to the switching element 202. In consequence, the control for suppressing the field current is performed under which the field current passing through the field winding 102 is gradually increased.

As an alternative, when the field current suppressing circuit 205 detects the voltage at the connection point P2 between the switching element 202 and the resistor 213, the field current suppressing circuit 205 generates a signal having restricted on-duty (duty ratio) and outputs the signal to the other input terminal of the AND circuit 203 so that the voltage to be detected at the connection point P2 does not exceed a predetermined value.

The AND circuit 203 outputs an AND signal, which is obtained based on the signals inputted into the two input terminal thereof, to the switching element 202. The AND signal is used as a driving signal. While the driving signal is at the high level, the switching element 202 is in the ON state. While the driving signal is at the low level, the switching element 202 is in the OFF state.

When a large amount of electric load 4 is connected, output voltage of the generator 1 is decreased, and the voltage comparator 204 outputs a high-level signal to the AND circuit 203. On the other hand, the field current suppressing circuit 205 generates a signal having restricted on-duty (duty ratio), and outputs the signal to the AND circuit 203. The AND circuit 203 generates a driving signal based on the inputted signals, and outputs the driving signal to the switching element 202. In consequence, the control for suppressing the field current is performed under which the maximum value of the field current passing through the field winding 102 is restricted to the predetermined value.

In the above embodiment, the resistor 209 serving as a protective resistor is disposed between the output terminal of the voltage comparator 204 and the C terminal. In other words, the voltage value at the output terminal of the voltage comparator 204 can be transmitted to the external ECU 5 through the resistor 209 and the C terminal.

The resistors 207 and 208, the voltage comparator 204, and the reference voltage generation circuit 206 correspond to a voltage comparing section (voltage comparing means). The switching element 202 corresponds to a field current controlling section (field current controlling means). The AND circuit 203, the field current suppressing circuit 205, and the resistor 213 correspond to a field current suppressing section (field current suppressing means). The C terminal corresponds to an external output terminal.

As described above, in the power generation control apparatus 2 for vehicles according to the embodiment, even when the control for suppressing field current is performed, a signal, which is obtained by comparing the output voltage of the generator 1 with the regulation voltage before the control is performed, is transmitted to the ECU 5. Therefore, the ECU 5 can accurately detect the operating state of the generator 1 when the electrical load varies in amount (i.e., the operating state is a state where the electrical load is applied). In consequence, the ECU 5 can perform control of idling engine speed (control of a throttle valve) in response to the applied electrical load to stabilize the idling engine speed.

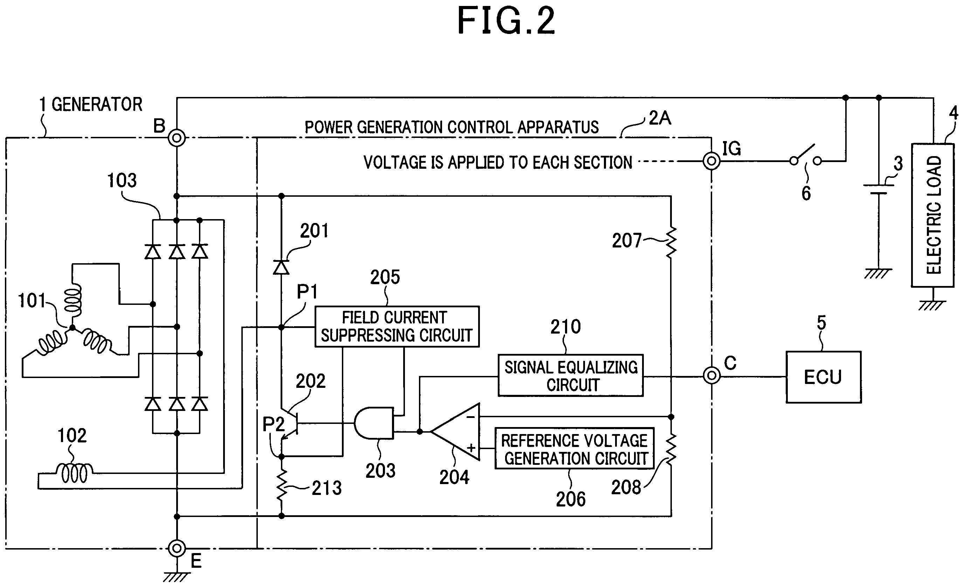

FIG. 2 is a diagram showing a configuration of a power generation control apparatus for vehicles according to a modification of the embodiment. In FIG. 2, the parts identical to those in FIG. 1 are denoted with the same reference numeral. The power generation control apparatus 2A for vehicles shown in FIG. 2 differs from the power generation control apparatus 2 shown in FIG. 1 in that the resistor 209 is replaced with a signal equalizing circuit 210. The signal equalizing circuit 210, which corresponds to a signal equalizing section (signal equalizing means), equalizes the signal corresponding to the comparison result of the voltage comparator 204. The output signal of the voltage comparator 204 fluctuates due to engine speed, intermittent electrical loads which are constantly operated, or the like. However, since the output signal is equalized, the operation state of the generator 1 when the electrical loads are applied can be detected more accurately.

In addition, the signal equalizing circuit 210 performs the equalization for a period of time longer than the control period of ignition of the vehicle. The period of time is, for example, more than 20 ms. The control period of ignition of 20 ms is determined as follows:

$$1 / ((750 \times 4) / 60) \times 10^3 = 20 \ (ms)$$

where the engine has eight cylinders and idling engine speed thereof is 750 rpm. In consequence, the influence of ignition noise generated during idling can be eliminated, thereby allowing the operation state of the generator 1 (i.e. the state where the electrical loads are applied) to be more accurately detected and allowing the idling engine speed to be more stable.

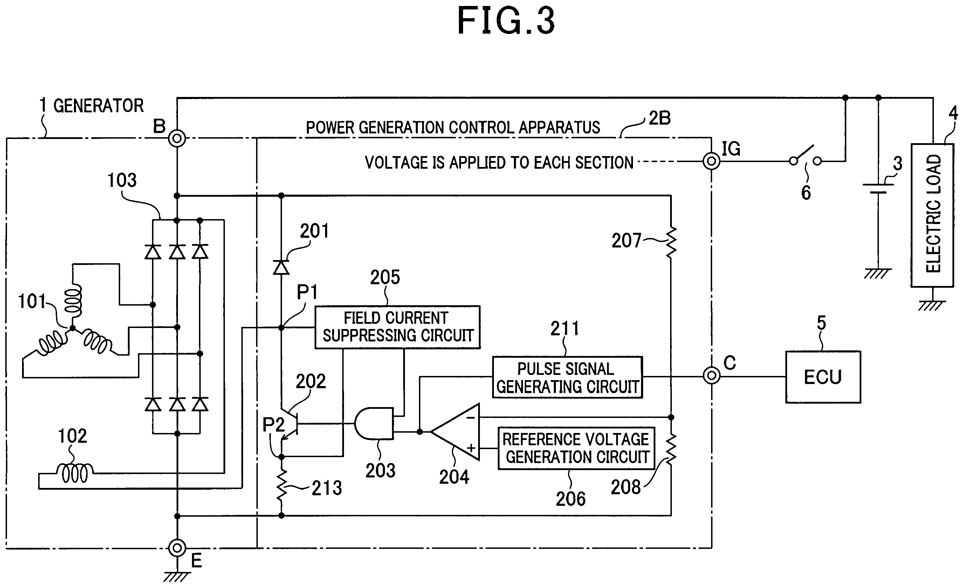

FIG. 3 is a diagram showing a configuration of a power generation control apparatus for vehicles according to another modification of the embodiment. In FIG. 3, the parts identical to those in FIG. 1 are denoted with the same reference numeral. The power generation control apparatus 2B for vehicles shown in FIG. 3 differs from the power generation control apparatus 2 shown in FIG. 1 in that the resistor 209 is replaced with a pulse signal generating circuit 211. The pulse signal generating circuit 211, which corresponds to a pulse signal generating section (pulse signal generating means), generates a pulse signal corresponding to the comparison result of the voltage comparator 204. The generated pulse signal is transmitted to the ECU 5 via the C terminal. Since the signal transmitted from the C terminal is a pulse signal, the signal can be transmitted and received between the power generation control apparatus 2B and the ECU 5 by using serial communication such as LIN (Local Interconnect Network) communication. Therefore, when comparing the above-described transmission with any direct transmission of voltage values, the above-described transmission improves reliability of the communication and facilitates sharing a signal line when other information is transmitted.

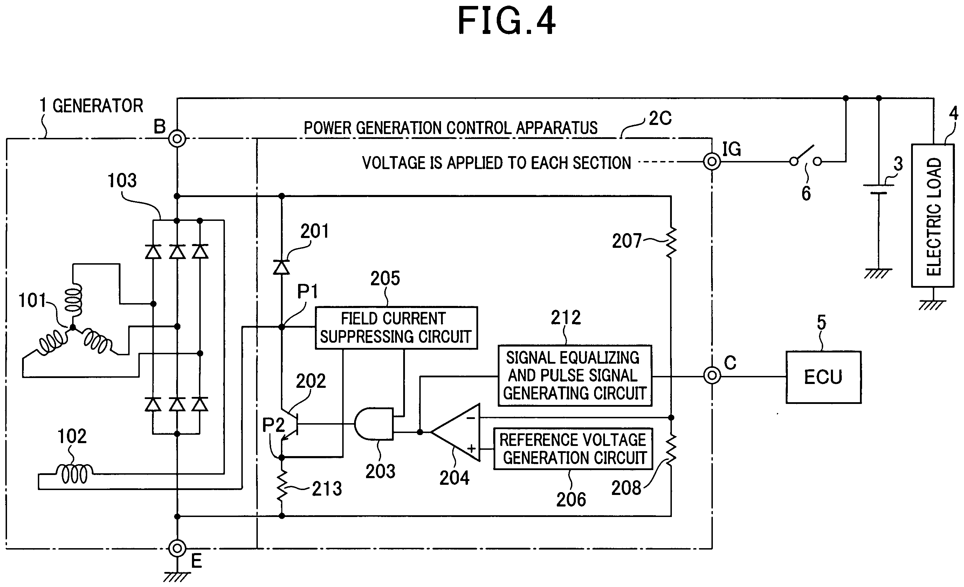

FIG. 4 is a diagram showing a configuration of a power generation control apparatus for vehicles according to another modification of the embodiment. In FIG. 4, the parts identical to those in FIG. 1 are denoted with the same reference numeral. The power generation control apparatus 2C for vehicles shown in FIG. 4 differs from the power generation control apparatus 2 shown in FIG. 1 in that the resistor 209 is replaced with a signal equalizing and pulse signal generating circuit 212. The signal equalizing and pulse signal generating circuit 212 has both functions of the signal equalizing circuit 210 shown in FIG. 2 and the pulse signal generating circuit 211 shown in FIG. 3. That is, the signal equalizing and pulse signal generating circuit 212 equalizes the signal corresponding to the comparison result of the voltage comparator 204 and generates a pulse signal corresponding to the equalized signal. The generated pulse signal is transmitted to the ECU 5 via the C terminal.

In the above-described embodiment, the control is performed so that the output voltage of the generator 1 agrees with the regulation voltage. Alternatively, the voltage at the terminal of the battery 3 (the voltage at the positive-pole terminal) may be applied to the voltage comparator 204 via a predetermined sensing line. In consequence, control is performed so that the voltage at the terminal of the battery 3 agrees with the regulation voltage.

In addition, in FIG. 1, although the resistor 209 serving as a protective resistor is disposed between the voltage comparator 204 and the C terminal, the resistor 209 may be removed according to the principle of operation. Alternatively, the resistor 209 may be replaced with a protective diode or another protective circuit. In addition, the voltage comparator 204 and the C terminal may be connected via a conversion circuit in which the level of the output voltage of the voltage comparator 204 is converted.

It will be appreciated that the present invention is not limited to the configurations described above, but any and all modifications, variations or equivalents, which may occur to those who are skilled in the art, should be considered to fall within the scope of the present invention.

**Claims**

1. An apparatus (2) for controlling generation of power in vehicles which include an engine associated to a generator (1) having a field winding (102) and a battery (3), comprising:

   a voltage comparing section (207, 208, 204, 206) that compares either output voltage of the generator (1) or terminal voltage of the battery (3) with a predetermined regulation voltage;
   a field current controlling section (202) that controls field current passing through the field winding (102) of the generator (1);
   a field current suppressing section (203, 205, 213) that drives the field current controlling section (202) based on a comparison result of the voltage comparing section (207, 208, 204, 206) to suppress the field current, and gradually increases the field current or restricts the maximum value of the field current; and
   an external output terminal (C), which is a communication terminal that is connected to an external control unit (5) which is disposed outside the generator (1) and the apparatus (2), that transmits either a first signal outputted from the voltage comparing section (207, 208, 204, 206) and inputted into the field current suppressing section (203, 205, 213) or a second signal corresponding to the first signal, the first signal or the second signal, which is obtained by comparing the output voltage of the generator (1) with the regulation voltage before the control is performed, is transmitted to the external output terminal (C) without going through the field current suppressing section (203, 205, 213), such as the external control unit (5) can perform control of idling engine speed in response to applied electrical load to stabilize the idling engine speed,

   **characterized in that**
   the field current suppressing section (203, 205, 213) comprises a field current suppressing circuit (205) which detects a voltage at a connection point between the field current controlling section (202) and the field winding (102), and **in that** the apparatus (2) further comprises a signal equalizing section (210) that equalizes the first or second signal, wherein the signal equalizing section (210) performs equalization for a period of time longer than a control period of ignition of the vehicle, such as the influence of ignition noise generated during idling can be eliminated, thereby allowing the operation state of the generator (1) to be more accurately detected and allowing the idling engine speed to be more stable.

2. The apparatus according to claim 1, further comprising a pulse signal generating section (211) that generates a pulse signal corresponding to the first or second signal,
   wherein the pulse signal is transmitted via the external output terminal (C).

3. The apparatus according to claim 1, wherein the period of time is more than 20 ms.

4. The apparatus according to claim 1, further comprising a pulse signal generating section (211) that generates a pulse signal corresponding to the equalized signal, wherein the equalized signal is transmitted via the external output terminal (C).

5. The apparatus according to claim 4, wherein the signal equalizing section (210) performs equalization for a period of time longer than a control period of ignition of the vehicle.

6. The apparatus according to claim 5, wherein the period of time is more than 20 ms.

7. The apparatus according to claim 1, wherein the field current suppressing section (203, 205, 213) generates a third signal having on-duty obtained by increasing on-duty of the detected voltage with a predetermined increasing rate.

8. The apparatus according to claim 7, wherein the field current suppressing section (203, 205, 213) drives the field current controlling section (202) based on the comparison result and the third signal.

9. The apparatus according to claim 1, wherein the field current suppressing section (203, 205, 213) detects a voltage at an output side of the field current controlling section (202).

10. The apparatus according to claim 9, wherein the field current suppressing section (203, 205, 213) generates a fourth signal having restricted on-duty so that the voltage to be detected at the output side does not exceed a predetermined value.

11. The apparatus according to claim 10, wherein the field current suppressing section (203, 205, 213) drives the field current controlling section (202) based on the comparison result and the fourth signal.

**Patentansprüche**

1. Vorrichtung (2) zum Steuern einer Leistungserzeugung in Fahrzeugen, die eine Maschine beinhalten, der ein Generator (1) beigeordnet ist, der eine Feldwicklung (102) und eine Batterie (3) aufweist, aufweisend:

> einen Spannungsvergleichsabschnitt (207, 208, 204, 206), der entweder die Ausgangsspannung des Generators (1) oder die Klemmenspannung der Batterie (3) mit einer vorgegebenen Regelspannung vergleicht;
> einen Feldstromsteuerabschnitt (202), der den Feldstrom steuert, der durch die Feldwicklung (102) des Generators (1) strömt;
> einen Feldstromunterdrückungsabschnitt (203, 205, 213), der den Feldstromsteuerabschnitt (202) auf Basis eines Vergleichsergebnisses des Spannungsvergleichsabschnitts (207, 208, 204, 206), um den Feldstrom zu unterdrücken, und den Feldstrom graduell erhöht oder den Maximalwert des Feldstroms beschränkt; und
> ein externer Ausgangsanschluss (C), bei dem es sich um einen Kommunikationsanschluss handelt, der mit einer externen Steuereinheit (5) verbunden ist, die sich außerhalb des Generators (1) und der Vorrichtung (2) befindet, der entweder ein erstes Signal, das von dem Spannungsvergleichsabschnitt (207, 208, 204, 206) ausgegeben und in den Feldstromunterdrückungsabschnitt (203, 205, 213) eingespeist wird, oder ein zweites Signal, das dem ersten Signal entspricht, überträgt, wobei das erste oder das zweite Signal, das erhalten wird, indem die Ausgangsspannung des Generators (1) mit der Regelspannung vor der Durchführung der Steuerung verglichen wird, an den externen Ausgangsanschluss (C) übertragen wird, ohne den Feldstromunterdrückungsabschnitt (203, 205, 213) zu durchlaufen, so dass die externe Steuereinheit (5) eine Steuerung der Maschinenleerlaufdrehzahl als Reaktion auf eine angelegte elektrische Last durchführen kann, um die Maschinenleerlaufdrehzahl zu stabilisieren,

> **dadurch gekennzeichnet, dass**
> der Feldstromunterdrückungsabschnitt (203, 205, 213) eine Feldstromunterdrückungsschaltung (205) aufweist, die eine Spannung an einem Verbindungspunkt zwischen dem Feldstromsteuerabschnitt (202) und der Feldwicklung (102) erfasst, und
> die Vorrichtung (2) ferner einen Signalentzerrungsabschnitt (210) aufweist, der das erste oder zweite Signal entzerrt, wobei der Signalentzerrungsabschnitt (210) eine Entzerrung für einen Zeitraum durchführt, der länger ist als ein Steuerzeitraum der Zündung des Fahrzeugs, so dass der Einfluss des Zündungsgeräusches, das während des Leerlaufs erzeugt wird, eliminiert werden kann, wodurch der Betriebszustand des Generators (1) genauer erfasst werden kann und die Maschinenleerlaufdrehzahl stabiler sein kann.

2. Vorrichtung nach Anspruch 1, ferner aufweisend einen Pulssignalerzeugungsabschnitt (211), der ein Pulssignal erzeugt, das dem ersten oder zweiten Signal entspricht,
wobei das Pulssignal über den externen Ausgangsanschluss (C) übertragen wird.

3. Vorrichtung nach Anspruch 1, wobei der Zeitraum länger als 20 ms ist.

4. Vorrichtung nach Anspruch 1, ferner aufweisend einen Pulssignalerzeugungsabschnitt (211), der ein Pulssignal erzeugt, das dem entzerrten Signal entspricht, wobei das entzerrte Signal über einen externen Ausgangsanschluss (C) übertragen wird.

5. Vorrichtung nach Anspruch 4, wobei der Signalentzerrungsabschnitt (210) eine Entzerrung für einen Zeitraum durchführt, der länger ist als ein Steuerzeitraum der Zündung des Fahrzeugs.

6. Vorrichtung nach Anspruch 5, wobei der Zeitraum länger als 20 ms ist.

7. Vorrichtung nach Anspruch 1, wobei der Feldstromunterdrückungsabschnitt (203, 205, 213) ein drittes Signal mit einem Tastverhältnis erzeugt, das erhalten wird, indem das Tastverhältnis der erfassten Spannung mit einer vorgegebenen Erhöhungsrate erhöht wird.

8. Vorrichtung nach Anspruch 7, wobei der Feldstromunterdrückungsabschnitt (203, 205, 213) den Feldstromsteuerabschnitt (202) auf Basis des Vergleichsergebnisses und des dritten Signals ansteuert.

9. Vorrichtung nach Anspruch 1, wobei der Feldstromunterdrückungsabschnitt (203, 205, 213) eine Spannung an einer Ausgangsseite des Feldstromsteuerabschnitts (202) erfasst.

10. Vorrichtung nach Anspruch 9, wobei der Feldstromunterdrückungsabschnitt (203, 205, 213) ein viertes Signal erzeugt, das ein beschränktes Tastverhältnis aufweist, so dass die zu erfassende Spannung an der Ausgangsseite einen vorgegebenen Wert nicht überschreitet.

11. Vorrichtung nach Anspruch 10, wobei der Feldstromunterdrückungsabschnitt (203, 205, 213) den Feldstromsteuerabschnitt (202) auf Basis des Vergleichsergebnisses und des vierten Signals ansteuert.

**Revendications**

1. Appareil (2) pour contrôler la génération d'électricité dans des véhicules qui incluent un moteur associé à un générateur (1) ayant un enroulement de champ (102) et une batterie (3), comprenant :

une section de comparaison de tension (207, 208, 204, 206) qui compare soit la tension de sortie du générateur (1) soit la tension aux bornes de la batterie (3) à une tension de régulation prédéterminée ;
une section de contrôle de courant de champ (202) qui contrôle le courant de champ passant à travers l'enroulement de champ (102) du générateur (1) ;
une section de suppression de courant de champ (203, 205, 213) qui pilote la section de contrôle de courant de champ (202) sur la base d'un résultat de comparaison de la section de comparaison de tension (207, 208, 204, 206) pour supprimer le courant de champ, et augmente progressivement le courant de champ ou limite la valeur maximale du courant de champ ; et
une borne de sortie externe (C), qui est une borne de communication qui est raccordée à une unité de contrôle externe (5) qui est disposée en dehors du générateur (1) et de l'appareil (2), qui transmet soit un premier signal délivré en sortie par la section de comparaison de tension (207, 208, 204, 206) et entré dans la section de suppression de courant de champ (203, 205, 213) soit un deuxième signal correspondant au premier signal, le premier signal ou le deuxième signal, qui est obtenu par comparaison de la tension de sortie du générateur (1) à la tension de régulation avant que le contrôle ne soit effectué, est transmis à la borne de sortie externe (C) sans traverser la section de suppression de courant de champ (203, 205, 213), de telle manière que l'unité de contrôle externe (5) peut effectuer un contrôle de la vitesse du moteur au ralenti en réponse à la charge électrique appliquée pour stabiliser la vitesse du moteur au ralenti,

**caractérisé en ce que**
la section de suppression de courant de champ (203, 205, 213) comprend un circuit de suppression de courant de champ (205) qui détecte une tension au niveau d'un point de raccordement entre la section de contrôle de courant de champ (202) et l'enroulement de champ (102), et
**en ce que** l'appareil (2) comprend en outre une section d'égalisation de signal (210) qui égalise le premier ou le deuxième signal, dans lequel la section d'égalisation de signal (210) effectue l'égalisation pendant une période de temps plus longue qu'une période de contrôle d'allumage du véhicule, de telle manière que l'influence du bruit d'allumage généré durant la marche au ralenti peut être éliminée, permettant ainsi à l'état de fonctionnement du générateur (1) d'être détecté plus précisément et
permettant à la vitesse du moteur au ralenti d'être plus stable.

2. Appareil selon la revendication 1, comprenant en outre une section de génération de signal d'impulsion (211) qui génère un signal d'impulsion correspondant au premier ou au deuxième signal,

dans lequel le signal d'impulsion est transmis par l'intermédiaire de la borne de sortie externe (C).

3. Appareil selon la revendication 1, dans lequel la période de temps est de plus de 20ms.

4. Appareil selon la revendication 1, comprenant en outre une section de génération de signal d'impulsion (211) qui génère un signal d'impulsion correspondant au signal égalisé, dans lequel le signal égalisé est transmis par l'intermédiaire de la borne de sortie externe (C).

5. Appareil selon la revendication 4, dans lequel la section d'égalisation de signal (210) effectue l'égalisation pendant une période de temps plus longue qu'une période de contrôle d'allumage du véhicule.

6. Appareil selon la revendication 5, dans lequel la période de temps est de plus de 20ms.

7. Appareil selon la revendication 1, dans lequel la section de suppression de courant de champ (203, 205, 213) génère un troisième signal ayant un fonctionnement obtenu par augmentation du fonctionnement de la tension détectée avec un taux d'augmentation prédéterminé.

8. Appareil selon la revendication 7, dans lequel la section de suppression de courant de champ (203, 205, 213) commande la section de contrôle de courant de champ (202) sur la base du résultat de comparaison et du troisième signal.

9. Appareil selon la revendication 1, dans lequel la section de suppression de courant de champ (203, 205, 213) détecte une tension d'un côté sortie de la section de contrôle de courant de champ (202).

10. Appareil selon la revendication 9, dans lequel la section de suppression de courant de champ (203, 205, 213) génère un quatrième signal ayant un fonctionnement limité de sorte que la tension devant être détectée du côté sortie ne dépasse pas une valeur prédéterminée.

11. Appareil selon la revendication 10, dans lequel la section de suppression de courant de champ (203, 205, 213) commande la section de contrôle de courant de champ (202) sur la base du résultat de comparaison et du quatrième signal.

# FIG.1

EP 2 056 443 B1

# FIG.2

POWER GENERATION CONTROL APPARATUS — 2A

1 GENERATOR

VOLTAGE IS APPLIED TO EACH SECTION

FIELD CURRENT SUPPRESSING CIRCUIT — 205

SIGNAL EQUALIZING CIRCUIT — 210

REFERENCE VOLTAGE GENERATION CIRCUIT — 206

ELECTRIC LOAD — 4

ECU — 5

EP 2 056 443 B1

# FIG.3

EP 2 056 443 B1

# FIG.4

1 GENERATOR

POWER GENERATION CONTROL APPARATUS 2C

VOLTAGE IS APPLIED TO EACH SECTION

B

IG

6

3

4 ELECTRIC LOAD

103

101

102

201

P1

205 FIELD CURRENT SUPPRESSING CIRCUIT

202

P2

213

203

204

212 SIGNAL EQUALIZING AND PULSE SIGNAL GENERATING CIRCUIT

C

5 ECU

206 REFERENCE VOLTAGE GENERATION CIRCUIT

207

208

E

EP 2 056 443 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007281656 A
- JP 6019359 A
- JP 9084398 A
- EP 0720271 A
- US 2005135133 A
- US 2007227499 A
- US 2003062877 A
- US 2007096698 A